# EUROPEAN PATENT SPECIFICATION

(11) **EP 1 817 829 B1**
(45) Date of publication and mention of the grant of the patent: **03.02.2016**
(21) Application number: 05793921.7
(22) Date of filing: 21.10.2005
(51) Int. Cl.: H02H 9/08

(54) **DEVICE FOR WATT AND BLIND CURRENT COMPONENT COMPENSATION IN THE EARTH FAULT POINT AND PHASE-TO-GROUND VOLTAGE EQUALIZATION UNDER FAILURE-FREE NETWORK CONDITION**
ANORDNUNG ZUR WATT- UND BLINDSTROM-KOMPONENTEN-KOMPENSATION IM ERDFEHLERPUNKT UND SPANNUNGSENTZERRUNG VON PHASE NACH MASSE UNTER AUSFALLFREIEN NETZWERKBEDINGUNGEN
DISPOSITIF DESTINE A UNE COMPENSATION DE COMPOSANT DE COURANT ACTIF ET REACTIF DANS LE POINT DE DEFAUT A LA TERRE ET EGALISATION DE TENSION PHASE A NEUTRE DANS UN ETAT DE RESEAU EXEMPT DE DEFAILLANCE

(30) Priority: 21.10.2004 CZ 20041055
(43) Date of publication of application: 15.08.2007
(73) Proprietor: Zak, Frantisek, 373 67 Borek (CZ)
(72) Inventor: Zak, Frantisek, 373 67 Borek (CZ)
(86) International application number: PCT/CZ2005/000078
(87) International publication number: WO 2006/042482

(56) References cited:
- EP-A1- 0 164 321
- FR-A1- 2 736 767
- SE-B- 433 690

## Description

### Technical field

The present invention relates to a device and method for compensation of fault currents in the point of an earth fault within multiple phase alternating current power network. The device provides also the possibility of equalizing the phase-to earth voltages at failure-free condition of multiple phase alternating current power network.

### Prior Art

The compensation of earth capacitive currents of a network is usually solved by using an arc-suppression coil connected between the network neutral and the earth potential, or a choke installed into the secondary winding of a Bauch transformer. However, such systems do not allow compensation for the active component of the earth fault current. Furthermore, when using those systems, the earth fault current is increased by added active component of the choke, due to its losses.

Systems providing compensation for active component of the earth fault current are based on the principle of current injection into the auxiliary winding of a choke, connected between the neutral of the system and the earth potential. Nevertheless, outside the earth fault period, such systems being very energy-intensive, are not very used.

In the document EP 0164321A1 is described a wiring to reduce the earth fault current in heavy-current networks, where during an earth fault, between the earth and the neutral of the system a compensator is connected, consisting of two continuously adjustable rotary transformers. With the help of the power supply from a separate external source, through both transformers into the network is generated an additional current for the purpose of compensation for reactive and active components of the earth fault. This current is independently controllable in amplitude and phase-shift. This solution is disadvantageous, because it is necessary to add to the network another separate source, and in addition two continuously adjustable rotary transformers, and therefore it is appropriate only for networks with brought-out nodes (neutrals).

In the wiring according to the EP 0164321A1, between the network neutral and the earth, an arc-suppression coil with a secondary winding or a transformer must be connected. Into the secondary winding is then injected the necessary compensating current. This necessary compensating current requires a source of great power, in order to achieve full compensation for the earth capacitive current and the residual current. Therefore, the disadvantage of the method of compensation according to the EP 0164321A1 is, that this method is also very energy-intensive and has high operating costs. Another disadvantage lies in the fact that, in case of the power failure of the separate power source no compensation is ensured at all, not even to a minimum extent, and through the point of fault a large fault current continues to flow, carrying the risk of electric chock and high step voltage for persons moving near the site of the earth fault.

In the document SE 433690B is described a wiring, using another principle to eliminate the residual earth current during earth fault. The principle here described lies in the wiring of phase-arranged and adjustable capacitive or inductive elements. By using these additional (auxiliary) capacitive or inductive elements, it is possible to achieve a reduction of the reactive and active component of the earth current. This wiring is intended exclusively for compensated electric networks with brought-out node and connected arc-suppression coil. The compensation of an earth fault current is based on the operation of the arc-suppression coil in the out of tune state against the earth capacitance of the network. With under-compensated choke an inductive reactance, on the other hand, with overcompensated choke a capacitive reactance is connected into the sound phase conductors. For high values of the earth fault current it is necessary to operate the arc-suppression coil in the network neutral in a strong out of tune state, which is disadvantageous in terms of transients in the network, in particular in case of an intermittent earth fault.

In first moments of an earth fault, before capacitive or inductive elements are connected, the system according to the SE 433690B is not compensated, and therefore an increased current flows through the point of the fault. The voltage of the network undergoes more significant changes and upon interruption of the arc, the recovery voltage increases faster. This contributes to reduce the probability of a spontaneous disappearance of the earth fault. The spontaneous disappearance of an earth fault is one of greatest advantages of compensated networks, nevertheless, at this time the network is not compensated. Connecting inductive or capacitive elements between the phase and the earth in this network produces other transients. All of these transients result in voltage changes and thus contribute to overvoltages in the network. The emergence of overvoltages in the network then often results in the extension of a single-phase to a multi-phase earth fault.

In the failure-free condition, when tuning an arc-suppression coil in networks with high phase imbalance, which appears in particular due to different phase earth capacitances of the network, the zero component of the voltage has a high value and the phase-voltages show a high degree of imbalance. Then, the imbalance is eliminated by detuning chokes or by additional damping of the resonant circuit through optional resistors. These measures ultimately may, on the contrary, increase the value of the earth fault current of the network in the case of earth fault.

### Summary of the invention

The invention relates to a device according to claim 1 and a method according to claim 2.

The purpose of the invention consists in reducing the fault current value in the point of earth fault, and making possible a compensation for the voltage imbalance under failure-free condition.

This is achieved by setting the optimal value of the inductive earth reactance to the value of the earth phase capacitance of the relevant network phase, so that a parallel resonance arises. The inductive earth reactance is connected between the network phase and the earth potential.

In contrast to the previously used method of arc-suppression coil connection between the system neutral and the earth potential, this solution provides apart from maximum total capacitive current compensation capability even also equalization of phase voltages under failure-free condition within networks with substantial phase capacitance imbalance. By targeted variation of the phase earth reactance in the earth fault point during an earth fault, the active fault current component can be efficiently eliminated.

The phase earth reactance of inductive character can be realized by using single-phase chokes, the number of which corresponds to the number of phases of the given network, and the configuration of which, or connection of auxiliary circuits allow a variation of the resulting phase earth inductive reactance of the circuit with a multi-phase choke. This multi-phase choke must have a magnetic circuit, allowing the zero component of the magnetic flow to get closed. The chokes have to be rated for line-to-line voltage of the network.

The ideal situation how to minimize fault currents in case of an earth fault is to achieve the parallel resonance in each network phase between the phase earth capacitance and the installed phase earth reactance of inductive character. Then the reactance of the parallel resonance circuit has theoretically an infinite value and reduces substantially the fault current, flowing through the earth fault point. Theoretically the zero value of the network fault current can be obtained, but even with an precise tuning there is in fact always a residual active component of the fault current flowing through the point of fault.

The basic principle how to eliminate the active component of the fault current in the point of earth fault consists in the change of the phase inductive reactance within sound phases. The change of the earth phase reactance has to be made without affecting the reactive current component flowing across the phase earth reactances, but it must be done to achieve a change of the value and of the vector shift of the total current, passing through phase earth reactances to the point of earth fault. Just so we are able to affect both, the value and the direction of the flow of the active component of the fault current through the point of fault. This way, in the phase next to the faulty phase in the phase sequence, we increase the value of the phase earth reactance, and in the next phase to the faulty phase in the opposite direction of the phase sequence the phase earth reactance becomes lower.

Analogically, under failure-free condition the balance of the phase network voltages can be achieved. Here again, we try to get a parallel resonance of the earth phase reactance of inductive character with the earth capacitance of the corresponding phase of the network. By achieving parallel resonance condition in each phase, the resulting reactance of the parallel circuit will theoretically be infinite and consequently the phase capacitance imbalance will be eliminated. In fact, due to the tuning inaccuracy, the reactance value is usually comparable or higher than the value of leakage resistances. Thus the voltage symmetry is more affected by the proportion of leakage resistances of individual phases. Therefore the equalization of phase voltages will depend on the imbalance of network leakage resistances. The imbalance of phase leakage resistances can be eliminated by means of a small change of the phase reactance of the parallel resonance circuit, which can be achieved through a slight detuning of the resonance circuit with equalization of phase voltages.

### Description of the drawings

The invention is now to be described with reference to the attached drawings. Figure 1. show an example of wiring diagram of phase earth reactances of inductive character connected between individual network phases and the point of earth potential. Figure 2. show a phasor graphic, demonstrating the principle of compensation of the earth capacitive current. The phasor graphic in figure 3. shows the compensation of the earth capacitive current with a partial elimination of the network active leakage current during an earth fault, carried out when changing the phase earth reactances.

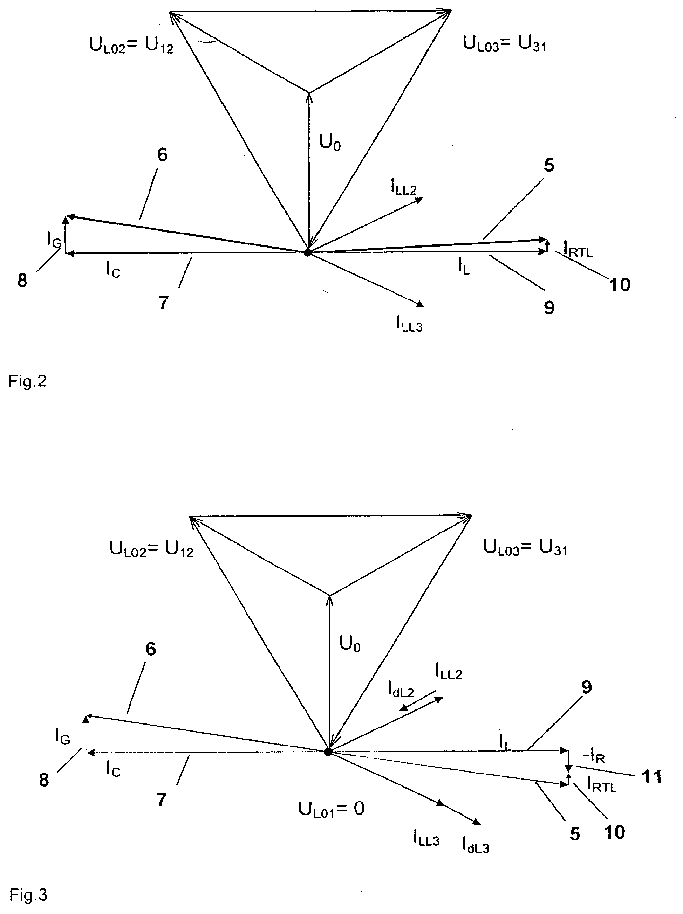

### Denomination of vectors - figures 2 and 3.

- I_{C}: total capacitive current of the network
- I_{G}: total leakage current of the network
- I_{L}: total choke inductive current
- I_{LL2}, I_{LL3}: phase choke inductive current
- I_{dL2}, I_{dL3}: current variation created by change of the phase reactance of chokes
- -I_{R}: resultant active choke current component
- I_{RTL}: active choke current component
- U_{L01}, U_{L02}, U_{L03}: phase-to-earth voltage of phases
- U₁₂, U₂₃, U₃₁: line voltage values

### Detailed description of the preferred embodiments

In a network without brought-out neutral between the phase and the earth potential one inductive earth reactance is always connected, consisting of a single-phase choke with auxiliary winding. Into the auxiliary winding circuit of each choke a tap-changing capacitor bank is connected. According to the connected capacitance, the resulting reactance of primary choke windings varies, and consequently, the tuning into parallel resonance with the earth capacitance of the network phase conductors is achieved. Before the choke resonance circuit within networks with substantial phase voltage imbalance is tuned, the phase voltage imbalance can partly be equalized by connecting particular taps of the capacitor bank into individual phases. The improvement of the phase voltage imbalance is reflected in the decrease of the zero voltage-component and the balance of line-to earth voltages. The choke tuning process then continues with sequential connection of equal capacitors to all three phases at the same time. In this way, the resulting reactance of circuits with phase earth chokes is changed. In order to achieve an approximate tuning of the resonance circuit with a phase earth choke and phase earth capacitance **2** of the line, we have to choice a combination of capacitors providing just the maximum value of the zero voltage component. Through variation of individual phase earth reactances **1** of the phase earth chokes, the balancing of the phase capacitance imbalance within the network and consequently also the equalization of line-to-earth voltages is possible. This results in a drop of the zero voltage component value to its minimum, even at precisely tuned condition of phase earth chokes into parallel resonance.

During an bolted earth fault the voltage of the faulty phase to earth has a zero value and through the corresponding phase earth choke no current is passing. The both remaining phase earth chokes acquire a line-to-line voltage to the earth, carrying a √3 times higher current as they do in the steady failure-free state. The value of the phase earth capacitive current **12** in both sound phases is √3 times increased too. Even during the earth fault, the parallel resonance circuit remains permanently tuned and through the point of earth fault **4** the same total inductive current **9** of phase earth reactances as well as the total capacitive current **7** of the network flows. Because the total inductive current **9** of phase earth reactances and the total capacitive current **7** of the network eliminate each other, the point of earth fault **4** is carrying only the total leakage current **8** of the network and the active current component **10** of phase earth chokes. The occurrence of the active current component **10** of phase earth chokes is caused by active losses within their magnetic circuits and windings.

The active fault current component of an earth fault can be eliminated through changes of inductances of phase earth chokes in both sound phases. When e.g. a failure on the L1 phase occurs, through variation of inductances of phase earth chokes in phases L2 and L3 the resulting value and eventual flow direction of the active current component through the point of earth fault **4** can be affected. Within the phase L2, being the next to the faulty phase in the phase sequence, we increase the reactance of the phase earth choke, and within the phase L3 following the faulty phase in the counter sense of the phase sequence we decrease the reactance of the phase earth choke. Through appropriate variation of the reactances we reach the same total value of total inductive current **9** of phase earth reactances, which corresponds to the total capacitance current **7** of the network. The increase of the current I_{LL3} by I_{dL3}, as well as the decrease of the **current** I_{LL2} by I_{dL2} creates a shift of the sum vector of the total current **5** passing through phase earth chokes. Consequently the vector of total current **5** through phase earth chokes will contain a component of total inductive current **9** of phase earth reactances, having the same current value as the total capacitive current **7** of the network, and the active current component, having opposite orientation than the network leakage current. The resultant active current component **11** of phase earth reactances then compensates the active component of the total leakage current **8** of the network. In case of a substantial shift of the total current **5** passing through phase earth reactances, even an inversion of the active component current flow in the point 4 of earth fault **4** can occur.

### Industrial applicability

The proposed wiring is intended to provide compensation for earth capacitive currents in the point of earth fault within alternating-current systems. Furthermore at failure-free condition of the network the wiring has the capacity to equalize phase-to earth voltages against the earth potential. Its use is of advantage within networks with high active component value of the fault current in case of an earth fault - e.g. within cable networks. In addition, the use may be favourable even for transformation of networks with insulated neutral to systems with compensation of earth capacitive currents, because the proposed solution does not require a brought-out network neutral.

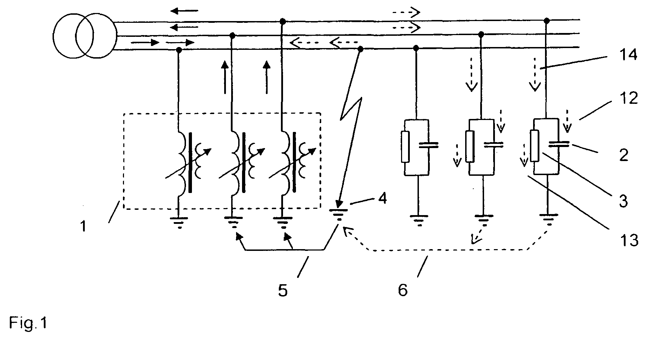

### Legend of letters to figures 1,2,3

- 1: variable phase earth reactance of inductive character
- 2: phase earth capacitance of the network
- 3: phase leakage resistance of the network
- 4: point of earth fault
- 5: total current passing through phase earth reactances
- 6: capacitive and leakage current of the network during earth fault
- 7: total capacitive current of the network
- 8: total leakage current of the network
- 9: total inductive current of phase earth reactances
- 10: active current component of phase earth reactances
- 11: resultant active current component of phase earth reactances
- 12: phase earth capacitive current
- 13: phase leakage current
- 14: phase earth current

## Claims

1. A device providing compensation of active and reactive current components in a point of earth fault (4), and equalization of phase-to earth voltages at failure-free condition of multiple phase alternating current network, **characterized in that** it comprises a variable phase earth reactance (1) of inductive character connected between each phase of the network and a point of earth potential of the network such reactance being tuned to compensate the capacitive earth fault current in the point of earth fault (4), by parallel resonance of the variable phase earth reactance (1) with the phase earth capacitance (2) of the network, and also to eliminate the phase voltage imbalance against the earth potential at failure-free condition of the network, by parallel resonance of the variable phase earth reactance (1) with the earth phase capacitance (2) of the network.

2. Method of elimination of the active component of an earth fault current using the device according to claim 1, **characterized in that** during an earth fault the phase earth reactance (1) of inductive character of sound phases is changed so that in the phase following the faulty phase in the direction of phase sequence the phase earth reactance (1) in the wiring increases, and in the phase next to the faulty phase in the opposite direction of the phase sequence the phase earth reactance (1) in the wiring decreases, which changes the magnitude and the phase shift of the vector of the total current (5), passing through phase earth reactances (1) to the point of earth fault (4).

## Patentansprüche

1. Vorrichtung zur Kompensation des Wirkstroms und des Bildstroms im Ort des Erdschlusses und Ausgleich der Phasenspannungen in dem störungsfreien Zustand des Netzes, **dadurch gekennzeichnet, dass** zwischen jeder Phase des Wechselstromnetzes und dem Ort mit dem Erdpotential die variable Erdphasenreaktanz (1) mit dem induktiven Charakter zur Kompensation des Erdkapazitätsstörstroms im Ort des Erdschlusses geschaltet wird, wobei die Kompensation durch die Gegenresonanz der variablen Erdphasenreaktanz (1) gegenüber der Erdphasenkapazität (2) des Netzes verursacht ist, und zur Eliminierung der Phasenspannungsasymmetrie gegenüber dem Erdpotential im Falle des störungsfreien Zustands des Netzes, die durch die Gegenresonanz der variablen Phasenreaktanz (1) gegenüber der Erdphasenkapazität (2) verursacht ist.

2. Methode der Eliminierung des Wirkstroms des Störstroms des Erdschlusses in der Schaltung nach dem Anspruch 1, **dadurch gekennzeichnet, dass** sich bei dem Erdschluss die Phasenerdreaktanz (1) mit dem induktiven Charakter in den gesunden Phasen ändert und dass sich zugleich die Größe und Verdrehung des Vektors des Gesamtstroms (5) über die Phasenerdreaktanzen (1) in den Ort (4) des Erdschlusses ändern, wobei man so verfährt, dass sich in der Phase, die in der Richtung der Folge der Phasen von der Phase mit der Störung folgt, die Phasenerdreaktanz (1) der Schaltung erhöht, und dass sich in der Phase, die in der Gegenrichtung der Folge der Phasen von der Phase mit der Störung ist, die Phasenerdreaktanz (1) der Schaltung reduziert.

## Revendications

1. Équipement pour compensation de la composante active et de la composante réactive dru courant à l'endroit de liaison à la terre et pour régler les tensions de phase dans un circuit sans défaillance, **est caractérisé par le fait qu'**entre chaque phase du réseau à courant alternatif et du lieu de liaison à la terre, une réactance de phase à terre (1) à caractère inductif est connectée pour la compensation du courant de défaut de capacité, causé par une résonance parallèle de la réactance de phase à terre (1) par rapport à la capacité terrestre des phases (2) du réseau et pour éliminer l'asymétrie des tensions de phase par rapport au potentiel terrestre dans le cas d'un état de réseau sans défaillance, causée par une résonance parallèle de la réactance de phase transversale (1) vis-à-vis de la capacité terrestre des phases (2).

2. Méthode d'élimination de la composante active du courant de défaut de la liaison à la terre dans une connection d'après la revendication 1, **est caractérisé par le fait qu'**en cas de liaison à la terre, la réactance de phase à terre (1) à caractère inductif dans les phases saines change, et, simultanément, change la dimension et l'orientation du vecteur de courant (5) à travers la réactance de phase à terre (1) à l'endroit de liaison à la terre (4), tout en procédant de façon à ce qu'on augmente la réactance de phase à terre (1) dans la phase qui suit la phase défaillante dans le même sens de succession des phases, et qu'on on diminue la réactance de phase à terre (1) dans la phase contraire au sens de succession des phases de la phase défaillante.
